# EUROPÄISCHE PATENTSCHRIFT

(11) **EP 3 585 552 B1**
(45) Veröffentlichungstag und Bekanntmachung des Hinweises auf die Patenterteilung: **21.08.2024**
(21) Anmeldenummer: 17811316.3
(22) Anmeldetag: 08.12.2017
(51) Int. Cl.: B23D 61/12

(54) **HUBSÄGEBLATT FÜR EINE WERKZEUGMASCHINE**
RECIPROCATING SAW BLADE FOR A MACHINE TOOL
LAME DE SCIE ALTERNATIVE POUR UNE MACHINE-OUTIL

(30) Priorität: 24.02.2017 DE 102017203031
(43) Veröffentlichungstag der Anmeldung: 01.01.2020
(73) Patentinhaber: Robert Bosch GmbH, 70442 Stuttgart (DE)
(72) Erfinder: KOCHER, Martin, 4500 Solothurn (CH); KARLEN, Urs, 3922 Stalden (CH); BRANTSCHEN, Damian, 3924 St. Niklaus (CH); GROLIMUND, Daniel, 4528 Zuchwil (CH)
(86) Internationale Anmeldenummer: PCT/EP2017/082064
(87) Internationale Veröffentlichungsnummer: WO 2018/153530

(56) Entgegenhaltungen:
- EP-A1- 2 777 856
- CN-U- 202 895 281
- CN-U- 203 957 042
- GB-A- 189 803 536
- US-A1- 2008 201 964

## Beschreibung

Die Erfindung bezieht sich auf ein Hubsägeblatt für eine Werkzeugmaschine wie zum Beispiel ein Stich- oder Säbelsägeblatt nach dem Oberbegriff des Anspruches 1.

### Stand der Technik

Ein derartiges Hubsägeblatt ist aus der US 2008 / 201964 A1 bekannt. Das Hubsägeblatt in Form eines Stichsägeblatts weist eine erste und eine zweite Sägezahnreihe auf, welche winklig zueinander angeordnet sind. Sowohl die erste als auch die zweite Sägezahnreihe nimmt gegenüber der Hubachse- bzw. Längsachse des Hubsägeblatts einen Winkel ein, wobei der Winkel der ersten Sägezahnreihe entgegengesetzt gerichtet ist zum Winkel der zweiten Sägezahnreihe. Ferner wird auf die Druckschriften DE 10 2007 039 240 A1, GB 03536 A, CN 202 895 281 U, EP 2 777 856 A1 und CN 203 957 042 U verwiesen.

### Offenbarung der Erfindung

Die Erfindung betrifft ein Hubsägeblatt mit den Merkmalen des Anspruchs 1.

Somit weist das Sägeblatt in Längs- bzw. Hubachsrichtung des Sägeblatts zumindest drei Sägezahnabschnitte auf. Die Längsachse erstreckt sich zwischen dem Schaft und der Spitze des Sägeblattes und verläuft zumindest mittig durch den Schaft. Die Reihenfolge der Sägezahnabschnitte ist in Längsachsrichtung des Sägeblattes ausgehend vom Schaft zur Spitze des Hubsägeblatts bevorzugt wie folgt: erst die erste Sägezahnreihe, dann folgt die weitere Sägezahnreihe und zuletzt schließlich die zweite Sägezahnreihe. Die erste, zweite und weitere Sägezahnreihe, weisen jeweils Sägezähne mit Sägezahnspitzen auf. Die Sägezahnspitzen der weiteren Sägezahnreihe sind somit bezogen auf die Längsachse zu den Sägezahnspitzen der ersten und zweiten Sägezahnreihe sprunghaft zurückversetzt, angeordnet. Somit ist der Abstand der Sägezahnspitzen der weiteren Sägezahnreihe zur Längsachse des Hubsägeblatts geringer als der geringste Abstand zumindest einer Sägezahnspitze der ersten und zweiten Sägezahnreihe. Als Bezugsgröße wird hier bewusst, die Längs- bzw. Hubachse des Sägeblattes gewählt, da ein Rücken des Sägeblattes teils Schräg zur Längsachse des Sägeblattes verlaufen kann. Prinzipiell kann der Rückversatz aber auch als Versatz hin zum Sägeblattrücken bezeichnet werden, insbesondere dann wenn der Rücken des Sägeblatts ebenfalls parallel zur Hubachsrichtung orientiert ist. Durch die zurückgesetzte weitere Sägezahnreihe verringert sich bei der sägenden Verwendung des Hubsägeblatts beim Übergang von der ersten oder zweiten Sägezahnreihe zur weiteren Sägezahnreihe (während eines Aufwärts- und/oder Abwärtshubs) insbesondere schlagartig das Zerspanungsvolumen (bei ansonsten konstanten Parametern wie: gleichbleibender Hubzahl, konstanter Führungsbewegung der Hubsäge über das Werkstück in Sägerichtung, konstanten Werkstückparametern). Zudem wächst das Auffangvolumen für Sägespäne im Bereich der weiteren Sägezahnreihe (Spanraum vergrößert sich). Es ist aber vorteilhaft, insbesondere durch die Wahl der Größe bzw. des Abstands des Rückversatzes der weiteren Sägezahnreihe zur Längsachse im Verhältnis zum Abstand der benachbarten ersten und zweiten Sägezahnreihen zur Längsachse vorteilhaft, zumindest ein abgeschwächtes Zerspanen bzw. Sägen im Bereich der weiteren Sägezahnreihe zu ermöglichen (vgl. weiter unten). Der Rückversatz, insbesondere die daraus resultierende Zerspanungsvolumenänderung, erfolgt überdies in einem Bereich des für die Schnittqualität wichtigen Umkehrpunkt der Hubbewegung (oberer und unterer Totpunkt). Am Beispiel einer ein Holzwerkstück bearbeitenden Stichsäge soll dies kurz verdeutlicht werden. Das Hubsägeblatt befindet sich, bezogen auf eine Werkstückoberfläche, auf der sich die Handwerkzeugmaschine über die Fußplatte abstützt, in einer Aufwärts- oder Rückzugsbewegung hin zur Handwerkzeugmaschine. Die Sägezähne der zweiten Sägezahnreihe schneiden und/oder trennen und/oder reißen Sägespäne, insbesondere verstärkt durch die winkelige (positive) Räumstellung (Winkel der zweiten Sägezahnreihe zur Längsachse) von der unteren Werkstückoberfläche in das Werkstück hinein. Die Sägezähne der ersten Sägezahnreihe (die, wie weiter unten beschrieben insbesondere zur Spitze des Sägeblattes gerichtete Sägezähne aufweist), welche eine bezogen auf die Aufwärtsbewegung entgegengesetzte winkelige (negative) Räumstellung aufweist (vgl. Winkel der ersten Sägezahnreihe zur Längsachse, oder anders ausgedrückt der Abstand der ersten Sägezähne der ersten Sägezahnreihe zur Längsachse verringert sich ausgehend vom Schaft hin zur weiteren Sägezahnreihe) schneiden und/oder trennen und/oder reißen zumindest kaum Sägespäne aus der oberen, der Werkzeugmaschine zugewandten, Oberfläche (transportieren aber durchaus bereits abgetrennte Sägespäne aus dieser Oberfläche; Stichwort Spanabfuhr). Durch den sprunghaften Rückversatz der weiteren Sägezahnreihe wird ein Schneiden und/oder Trennen und/oder Reißen von Sägespänen zusätzlich vermieden oder zumindest abgeschwächt. Der Rückversatz mindert darüber hinaus zusätzlich Ausrisse an der der Werkzeugmaschine zugewandten Oberfläche eines beispielsweise dünneren Werkstücks. Das Sägeblatt kann bei dünnen Werkstücken (im Bereich des oberen Tot- oder Umkehrpunkts), bis über eine Teilungsebene des Sägeblatts hinaus, aus dem Werkstück gezogen werden, so dass ein Bereich der weiteren Sägezahnreihe mit Sägezähne, welche (auf einer der Spitze zugewandten Seite einer Teilungsebene des Sägeblattes) hin zum Schaft gerichtete sind, in Kontakt mit der oberen Werkstückoberfläche kommen kann. Durch den Rückversatz ist die Schneid-, Trenn- und/oder Ausrisswirkung aber verringert, so dass Ausrisse selbst bei dünnen Werkstücken vermieden werden können. Summa summarum lässt sich somit die Schnittqualität verbessern. Die Anzahl und Stärke von unerwünschten sogenannten Werkstückausrissen, insbesondere an der Werkstückoberfläche (sowohl an der oberen als auch der untere Werkstückoberfläche) wird verringert.

Materialausschuss kann vermieden werden, ein Sägen von unterhalb oder von gegenüber der Sichtoberfläche (wie es beim Sägen mit Stichsägen durch Profis häufig Anwendung findet um das Problem zu umgehen), kann vermieden werden. Dies verbessert die Handhabung bzw. Bearbeitung von Werkstücken mit dem erfindungsgemäßen Sägeblatt und macht die Bearbeitung angenehmer und komfortabler.

Ferner wird vorgeschlagen, dass die weitere Sägezahnreihe auf einer Geraden angeordnet ist, insbesondere einer Geraden parallel zur Längsachse. Somit sind die Sägezähne, insbesondere die Sägezahnspitzen der Sägezähne der weiteren Sägezahnreihe auf einer Geraden (betrachtet aus einer Seitenansicht auf die Blattfläche) angeordnet. Man könnte auch sagen, dass die Sägezahnspitzen der weiteren Sägezahnreihe eine Ebene aufspannen, oder insbesondere auf einer Sägezahnspitzeneben angeordnet sind. Sägezähne von Hubsägeblättern können prinzipiell geschliffen und/oder verschränkt sein, so dass die Spitzen teils quer zu den Seitenflächen des Hubsägeblatts versetzt angeordnet sein können. Daher ist die Bezeichnung Gerade hier vereinfachend gewählt. Die weitere Sägezahnreihe bzw. Sägezahnspitzen können aber auch in einer konkaven oder konvexen Reihe oder andersartig angeordnet sein, so dass sie nicht auf einer Gerade liegen bzw. die Sägezahnspitzen nicht in einer Sägezahnspitzenebene zum Liegen kommen. Vorteilhafterweise wird durch die gerade Anordnung der weiteren Sägezahnreihe die Fertigung vereinfacht. Der Spanraum kann konstant vergrößert werden. Die Schnittqualität wird verbessert; eine Verringerung der Ausrissneigung beim Sägen wird erzielt.

Zudem wird vorgeschlagen, dass die erste und zweite Sägezahnreihe jeweils auf einer Geraden angeordnet sind. Auch hier gilt, dass die Sägezähne, insbesondere die Sägezahnspitzen der Sägezähne der ersten und zweiten Sägezahnreihe jeweils auf einer Geraden (betrachtet aus einer Seitenansicht auf die Blattfläche) oder jeweils auf einer durch die Sägezahnspitzen der ersten bzw. zweiten Sägezahnreihe gebildeten Ebene zum Liegen kommen; insbesondere auf einer jeweils zugehörigen Sägezahnspitzenebene. Die erste und zweite Sägezahnreihe bzw. deren Sägezahnspitzen können aber auch in einer konkaven oder konvexen Reihe oder andersartig angeordnet sein. Vorteilhafterweise wird durch die gerade Anordnung die Fertigung vereinfacht. Ein konstant progressives (aggressives) oder degressives Sägen kann insbesondere aufgrund der positiven bzw. negativen Räumstellung erzielt werden. Dies führt zu einer Verstetigung der Schnittbewegung, der Schnittführung und damit auch der Hubsägenhandhabung. Der Sägefortschritt sowie die Schnittqualität werden verbessert.

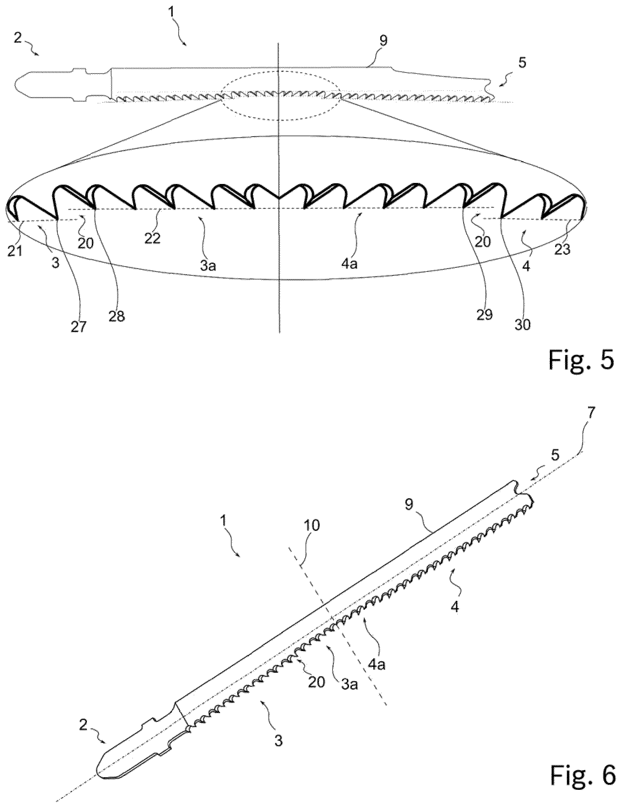

Außerdem wird vorgeschlagen, dass der Rückversatz bezogen auf eine sogenannte Teilung zumindest erster und/oder zweiter und/oder weiterer Sägezähne, der korrespondierenden Sägezahnreihen, zwischen 10 % und 35 % beträgt, insbesondere zwischen 15 % und 30 % beträgt, besonders bevorzugt 25 % beträgt. Der Rückversatz kann bezogen auf eine Breite des Sägeblatts quer zur Längsachse und im Wesentlichen parallel zur Seitenfläche des Sägeblattes (nicht die Dicke des Sägeblatts) ein Verhältnis von 1 % bis 20 %, insbesondere 3 % bis 16,5 % einnehmen. Bezogen auf eine maximale Breite des Sägeblattes beträgt das Verhältnis bevorzugt 3,4 % bis 6,8 %, besonders bevorzugt rund 5,7 % betragen. Bezogen auf eine minimale Breite eines Hubsägeblatts, insbesondere im Bereich der Teilungsebene des Hubsägeblatts, (beispielsweise eines Kurvensägeblatts gemäß Figur 5), beträgt das Verhältnis bevorzugt 4,9 % bis 9,8 % insbesondere rund 8,2 %. Durch die Wahl des Rückversatzes (vgl. auch oben) kann die Schnittqualität im Bereich des Hubumkehrpunktes entscheidend beeinflusst und damit die Schnittqualität entscheidend gesteuert werden, insbesondere verbessert werden. Dadurch, dass der zurückgesetzte Bereich Sägezähne aufweist, trägt auch dieser Bereich zum Sägen bzw. Zerspanen bei. Durch die vorgenannte Wahl der Größe des Rückversatzes wird erzielt, dass die weitere Sägezahnreihe weniger als, aber noch merklich, zum Sägefortschritt beitragen kann. (Als Referenz für nicht mehr merklich gilt ein unverzahnter Sägeblattabschnitt.) Die Schnittqualität verbessert sich dadurch spürbar (tastbar) und/oder sichtbar (weniger Ausrisse) an den Werkstückoberflächen (Ober- und Unterseite) und insbesondere dennoch kann ein hoher Sägefortschritt erzielt werden. Mit den besonders bevorzugten Werten kann ein Optimum, bezogen auf ein beispielhaft ausgewähltes und in der Figurenbeschreibung näher beschriebenes Sägeblatt, erzielt werden.

Darüber hinaus wird vorgeschlagen, dass die erste und/oder zweite Sägezahnreihe entgegengesetzte Schneidrichtungen aufweisen. Das heißt, die Sägezähne, insbesondere die Sägezahnspitzen der Sägezähne der ersten Sägezahnreihe weisen in entgegengesetzte Richtungen zur zweiten Sägezahnreihe, insbesondere in die entgegengesetzte Schneidrichtung. Anders ausgedrückt weisen die Sägezahnspitzen der ersten Sägezahnreihe zur Spitze des Hubsägeblatts und/oder die Sägezahnspitzen der zweiten Sägezahnreihe zum Schaft des Hubsägeblatts. Ein Freiwinkel umfasst in entgegengesetzter Richtung typischerweise 30° bis 45°, insbesondere betragen beide Freiwinkel rund 35°. Vorteilhaft, können dadurch Werkstückausrisse an der jeweiligen Werkstückoberfläche (Ober- und Unterseite; bzw. beiden potentiellen Sichtflächen) deutlich verringert werden. Die Schnittqualität wird erheblich verbessert. Beim Aufwärtshub hin zur Hubsäge wird bezogen auf die Trennebene des Sägeblattes im Wesentlichen mit der zweiten Sägezahnreihe gesägt; beim Abwärtshub im Wesentlichen mit der ersten Sägezahnreihe gesägt. (insbesondere durch die Flanken der Sägezähne gesägt, geschnitten, getrennt und/oder gerissen). Die Trennbewegung der Sägespäne erfolgt in das Werkstück hinein und verhindert damit einen Ausriss von Werkstückteilen aus der Oberfläche. Die abgerundeten (stumpfen) nicht geschliffenen Rücken der jeweiligen Sägezähne der gegenüberliegenden Sägezahnreihe, in diesem Beispiel der ersten Sägezahnreihe, die beim Aufwärtshub aus dem Werkstück austreten, bewirken typischerweise kein Oberflächenausriss. Sie tragen zudem höchstens unwesentlich zum Sägefortschritt bei, vielmehr geben Sie lediglich zuvor gesägte Sägespäne frei (Spanauswurf).

Überdies wird vorgeschlagen, dass die weitere Sägezahnreihe Sägezähne entgegengesetzter Schneidrichtung aufweist. Diese sind vorteilhaft bezogen auf die Längserstreckung der weiteren Sägezahnreihe spiegelsymmetrisch zur längsmittig und normal zur Längsachse verlaufenden Teilungsebene angeordnet. Oder anders ausgedrückt: die Sägezähne sind spiegelsymmetrisch zu einer normal zur Längsachse verlaufenden und die weitere Sägezahnreihe längsmittig schneidenden Symmetrieebene angeordnet. Dadurch können auch im zurückgesetzten Bereich die vorgenannten vorteilhaften Effekte erzielt werden. Durch den jedoch generell abgeschwächten Beitrag der weiteren Sägezahnreihe zum Sägefortschritt (siehe oben) kann gleichzeitig die Schnittqualität in den Umkehrpunkten (oberer und unterer Totpunkt) verbessert werden bzw. eine Ausrissvermeidung erzielt werden. Insbesondere wird dadurch ein Ausriss (bezogen auf den Aufwärtshub (hin zur Hubsäge)) beim Sägen dünner Werkstücke durch die zur zweiten Sägezahnreihe benachbarten Sägezähne der weiteren Sägezahnreihe (jenseits der Teilungsebene bezogen auf die Hubsäge) verhindert. Sofern diese (kritischen) Sägezähne beim Aufwärtshub aus der Werkstückoberseite austreten, ist ihr negativer Effekt durch den Rückversatz abgeschwächt (siehe oben), dennoch trägt der weitere Bereich zum Sägefortschritt bei und ermöglicht in den Wendepunkten bzw. Tot- oder Hubumkehrpunkten einen sanften Anschnitt des Werkstücks (ebenfalls positiv für Ausrissvermeidung).

Ferner wird vorgeschlagen, dass die Sägezähne der ersten und zweiten Sägezahnreihe, insbesondere auch die Sägezähne der weiteren Sägezahnreihe zumindest im Wesentlichen spiegelsymmetrisch zur Teilungs- bzw. Symmetrieebene angeordnet sind. Die Teilungs- bzw. Symmetrieebene verläuft normal zur Längsachse des Hubsägeblatts und schneidet die weitere Sägezahnreihe längsmittig. "Im Wesentlichen" bedeutet hier, sofern die Längserstreckung der ersten und zweiten Sägezahnreihe identisch ist. Falls die Längserstreckung der ersten und zweiten Sägezahnreihe jedoch unterschiedlich ist, gilt die Symmetrie zumindest für identische Abstände bezogen auf die Teilungsebene. Dies ermöglicht eine einfache Fertigung, beispielsweise durch lediglich einmaliges, einfaches Umspannen auf den Fertigungsmaschinen.

Es wird vorgeschlagen, dass die Längserstreckung der zweiten Sägezahnreihe größer oder gleich der Längserstreckung der ersten Sägezahnreihe ist, insbesondere um bis zu 50 % größer, vorzugsweise 15 % bis 35 % größer. Die Längserstreckung der zweiten Sägezahnreihe beträgt beispielsweise 30 bis 45 mm, insbesondere 41 mm, die der ersten Sägezahnreihe beispielsweise 25 mm bis 35 mm, insbesondere 30 mm. Damit lassen sich typische Werkstückdicken bis 40 mm, oder zumindest bis 30 mm optimal, sprich ausrissarm, bearbeiten.

Außerdem wird vorgeschlagen, dass die Längserstreckung der ersten oder zweiten Sägezahnreihe um 15 % bis 450 % größer ist als die Längserstreckung der weiteren Sägezahnreihe, insbesondere um 30 % bis 85 % größer. Die Längserstreckung der ersten oder zweiten Sägezahnreihe beträgt beispielsweise 10 mm bis 26 mm, insbesondere 22,5 mm. Bei einem Hub einer Hubsäge von beispielsweise 26 mm und typischen Werkstückdicken größer einiger Millimeter, kann dadurch ein ausreichender Sägefortschritt gewährleistet und ein Austritt der ersten Sägezahnreihe bzw. Sägezähnen der ersten Sägezahnreihe aus der unteren Werkstückoberfläche (im Bereich des unteren Totpunkts) und ein Austritt von Sägezähnen der zweiten Sägezahnreihe aus der oberen Werkstückoberfläche (der Hubsäge zugewandten Werkstückoberfläche; im Bereich des oberen Totpunkts) vermieden werden. Dadurch wird die Schnittqualität gesteigert.

Die Längserstreckung der weiteren Sägezahnreihe ist kleiner als ein Hub einer zur Verwendung des Hubsägeblatts vorgesehenen Hubsäge, insbesondere um 5 % bis 65 % kleiner, besonders bevorzugt um 10 % bis 15 % kleiner. Wie vorgenannt wird dadurch die Schnittqualität verbessert und ein Ausreißen von Werkstücken insbesondere aus der oberen und unteren Werkstückoberfläche verhindert.

Außerdem wird vorgeschlagen, dass die Sägezähne der ersten und/oder zweiten und/oder weiteren Sägezahnreihe mit einer Standardverzahnung oder einer Japanverzahnung geschliffen sind, insbesondere wobei sie keine oder eine Verschränkung aufweisen. Dies steigert den Sägefortschritt und/oder die Schnittqualität.

Ferner wird eine Hubsäge mit einem erfindungsgemäßen Hubsägeblatt beansprucht.

Weitere Vorteile und zweckmäßige Ausführungen sind den weiteren Ansprüchen, der Figurenbeschreibung und den folgenden Figuren zu entnehmen. Es zeigen:
Fig. 1 eine Seitenansicht eines erfindungsgemäßen Hubsägeblatts,
Fig. 2 das Hubsägeblatt in einer Ansicht von unten,
Fig. 3 einen Schnitt gemäß Schnittlinie A-A aus Fig. 1,
Fig. 4 eine perspektivische Darstellung des Sägeblattes mit eingezeichneten Span- und Freiwinkeln der Sägezähne,
Fig. 5 eine vergrößerte Darstellung der Figur 1, insbesondere der weiteren Sägezahnreihe mit angrenzender ersten und zweiten Sägezahnreihe,
Fig. 6 ein beispielhafte alternative Ausführungsformen der Verzahnung bzw. der Sägezähne und des Sägeblatts,
Fig. 7 eine schematische Darstellung des Hubsägeblatts in einem oberen und unteren Tot- oder Wendepunkt mit einem Werkstück.

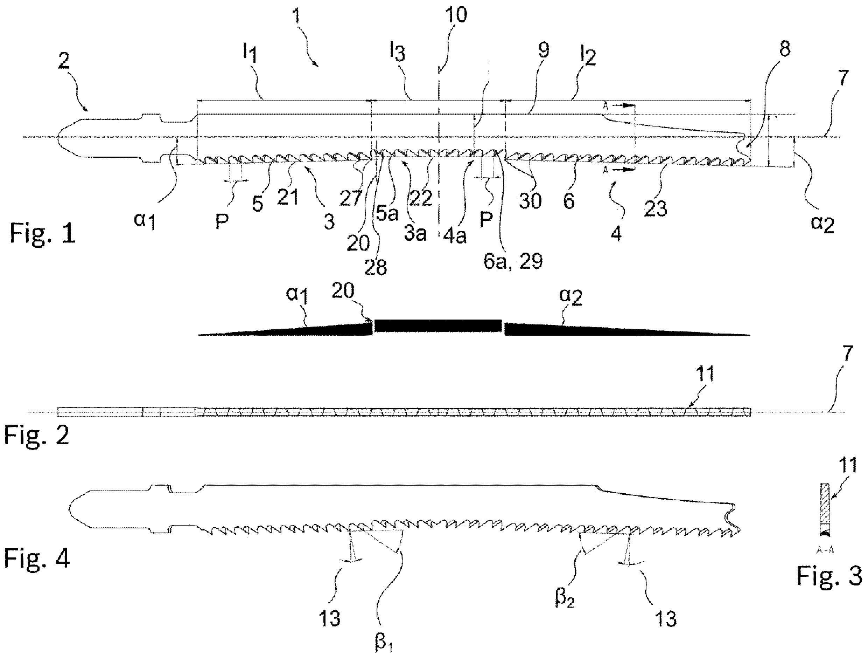

Fig. 1 zeigt eine Seitenansicht eines erfindungsgemäßen Hubsägeblatts 1 in Form eines Stichsägeblatts. Das in Fig. 1 dargestellte Hubsägeblatt 1 weist einen Schaft 2 auf, über den das Hubsägeblatt 1 in einer maschinell betriebenen Hubsäge, insbesondere Stichsäge (nicht dargestellt) eingespannt werden kann. Der Schaft 2 ist ein T-Schaft, kann aber auch andere gängige oder künftige Schaftformen annehmen. Am Hubsägeblatt 1 verteilen sich erste Sägezähne 5 auf eine erste Sägezahnreihe 3, die benachbart zum Schaft 2 angeordnet ist und zweite Sägezähne 6 auf eine zweite Sägezahnreihe 4, die benachbart zur Spitze 8 des Sägeblattes angeordnet ist. Ferner verteilen sich weitere Sägezähne 5a, 6a auf eine weitere Sägezahnreihe 3a, 4a die zwischen der ersten und der zweiten Sägezahnreihe 3, 4 angeordnet ist. Die weitere Sägezahnreihe 3a, 4a verbindet sozusagen einen ersten mit einem zweiten Sägezahnreihenabschnitt und stellt selbst einen weiteren Sägezahnreihenabschnitt dar.

Alle drei Sägezahnreihen 3, 4, 3a, 4a sind jeweils auf Geraden angeordnet. Insbesondere sind die Sägezahnspitzen der Sägezähne 5, 6, 5a, 6a der jeweiligen Sägezahnreihe 3, 4, 3a, 4a jeweils auf einer diese verbindenden Geraden und/oder Sägezahnspitzenebene angeordnet. Die Geraden der ersten und zweiten Sägezahnreihe 3, 4 verlaufen quer bzw. winkelig zu einer Längsachse 7 des Hubsägeblatts. Die Winkel α₁, α₂ betragen jeweils 1,5°, weisen jedoch unterschiedliche Vorzeichen auf. Die weitere Sägezahnreihe ist parallel zur Längsachse 7 ausgerichtet. Somit verläuft auch die Gerade der weiteren Sägezahnreihe 3a, 4a parallel zur Längsachse 7 des Hubsägeblatts 1. Um bei dieser Definition auch eine Schränkung oder einen Schliff der Sägezähne 5, 6, 5a, 6a zu berücksichtigen könnte man anders ausgedrückt auch sagen, dass die Sägezahnspitzen der jeweiligen Sägezahnreihen 3, 4, 3a, 4a jeweils in einer gemeinsamen Ebene liegen bzw. diese aufspannen. Eine Längserstreckung l₁ der ersten Sägezahnreihe 3 beträgt rund 20-40 mm, insbesondere 30 mm, eine Längserstreckung l₂ der zweiten Sägezahnreihe 4 beträgt rund 25-45 mm, insbesondere 41 mm und eine Längserstreckung der weiteren Sägezahnreihe 3a, 4a beträgt rund 10-26 mm, insbesondere rund 22,5 mm. Prinzipiell ist aber auch denkbar, dass die Sägezahnreihen 3, 4, 3a, 4a einen konvexe oder konkave Form oder eine anders geartete Form aufweisen.

Die weitere Sägezahnreihe 3a, 4a ist bezogen auf eine Längsachse 7 zur ersten und zweiten Sägezahnreihe 3, 4 sprunghaft zurückversetzt angeordnet. Der Rückversatz 20 erfolgt im jeweiligen Übergangsbereich der ersten bzw. zweiten Sägezahnreihe 3, 4 zur weiteren Sägezahnreihe 3a, 4a. Er beträgt bei einer Teilung P der Sägezähne 5, 6, 5a, 6a von rund 2 mm, etwa 0,3-0,6 mm insbesondere 0,5 mm.

Die ersten Sägezähne 5 der ersten Sägezahnreihen 3 sind zur Spitze des Sägeblattes hin gerichtet, die zweiten Sägezähne 6 aus der zweiten Sägezahnreihe 4 sind zum Schaft 2 des Sägeblattes hin gerichtet. Durch diese Ausrichtung der ersten und zweiten Sägezähne 5, 6 wird eine Vorzugsschnittrichtung der jeweiligen Sägezahnreihe 3, 4 festgelegt. Die erste Sägezahnreihe 3 weist eine geringere Länge (hier ca. 20-30 % kürzer) als die zweite Sägezahnreihe 4 auf, könnte prinzipiell aber auch die gleiche Länge, oder vorzugsweise bei einem insgesamt kürzeren Hubsägeblatt 1 auch eine kürzere Länge aufweisen.

Die weitere Sägezahnreihe 3a, 4a wird durch eine Teilungsebene 10, welche quer zu einer Längsachse 7 des Hubsägeblatts 1 verläuft, mittig geteilt. Die weiteren Sägezähne 5a der weitere Sägezahnreihe 3a, 4a, welche auf der dem Schaft 2 zugewandten Seite (links) der Teilungsebene 10 angeordnet sind, sind in Richtung der Spitze 8 des Hubsägeblatts 1 gerichtet; die bezogen auf die Teilungsebene 10 auf der Seite der Spitze 8 angeordneten weiteren Sägezähne 6a, sind in Richtung des Schafts 2 gerichtet. Somit vollzieht sich im Bereich der Teilungsebene 10 ein Richtungswechsel der Ausrichtung der weiteren Sägezähne 5a, 6a. Somit wird ein Übergang der Ausrichtung zwischen ersten und weiteren Sägezähnen 5, 5a die zur Spitze 8 und zweiten und weiteren Sägezähnen 6, 6a die zum Schaft 2 gerichtet sind durch die Teilungsebene 10 verdeutlicht.

Die Längsachse 7 des Hubsägeblatts 1 entspricht zugleich der wesentlichen Hubachse oder auch Bewegungsrichtung des Hubsägeblatts 1. Der Rücken 9 des Sägeblattes 1 verläuft im Wesentlichen parallel zur Längsachse 7. Prinzipiell kann der Rücken aber auch einen Winkel zur Längsachse 7 aufweisen um beispielsweise einen positive oder negative Pendelung bei der Hubbewegung zu erzeugen oder diese zu verstärken und im Stand der Technik bekannten Effekte, beispielsweise progressive (aggressive) oder degressive Schnitte, zu erzeugen. Im Bereich der Spitze 8 verjüngt sich der Rücken 9 bezogen auf die Längsachse 7 das Hubsägeblatts 1, was einer typischen Ausgestaltung einer Spitze eines Hubsägeblatts 1 mit den im Stand der Technik bekannten Effekten entspricht. Ferner weist die Spitze 8 eine Ausnehmung zur Fertigungsaufnahme auf, die ebenfalls bauteiltypisch ist. Umfasst sind demnach auch Sägeblattrückenverläufe (Geometrien) z.B. schräg zur Längsachse 7 (zu- oder Abnehmend in Richtung der Spitze 8 oder des Schafts 2 des Sägeblatts 1), ebenso wie alternative Geometrien der Spitze 8 oder des Schafts 2.

Die erste und zweite Sägezahnreihen 3 und 4 weisen gegenüber der Längsachse 7 bzw. Hubachse einen Winkel α1 bzw. α2 mit unterschiedlichem Vorzeichen auf. Die erste bzw. zweite Sägezahnreihe 3 bzw. 4 nehmen vorteilhafterweise den gleichen Winkel α1 bzw. α2 gegenüber der Längsachse 7 mit unterschiedlichem Vorzeichen ein. Im Ausführungsbeispiel ist zweckmäßigerweise der Winkel α1 der ersten, dem Schaft 2 benachbarten Sägezahnreihe 3 positiv und der Winkel α2 der zweiten, der Spitze 8 zugewandten Sägezahnreihe 4 negativ. Typische Werte für die Winkel α1 bzw. α2 der ersten bzw. zweiten Sägezahnreihe 3, 4 sind Winkelbereiche zwischen 1° und 2° bzw. -1° und -2°, insbesondere 1.5° bzw. -1,5°. Die Winkel α1 und α2 werden zwischen der Zahnspitzenlinie, die durch die Zahnspitzen der jeweiligen Sägezähne 5 bzw. 6 verläuft, und der Längsachse 7 bzw. Hubachse gemessen. Die weitere Sägezahnreihe 3a, 4a ist dagegen parallel zur Längsachse 7 ausgerichtet. Der Rückversatz 20 hin zur Längsachse 7 aller Zahnspitzen der weiteren Sägezähne 5a, 6a bzw. der Abstand zur Längsachse 7 ist konstant. Er ist durchweg kleiner als der Abstand der Zahnspitzen der ersten und zweiten Sägezähne 5, 6 der ersten und zweiten Sägezahnreihe 3, 4 zur Längsachse 7.

Um die Winkel α1 und a2 der ersten und zweiten Sägezahnreihen 3, 4 und die winkelparallele Ausrichtung der weiteren Sägezahnreihe 3a, 4a bezogen auf die Längsachse 7, sowie den Rückversatz 20 zu verdeutlichen, ist in Fig. 1 unmittelbar unterhalb des Stichsägeblattes 1 ein (Steigungs-)Vieleck eingezeichnet. Die lange Basis verdeutlicht eine parallel zur Längsachse 7; die Schrägen stellen die Geraden der ersten und zweiten Sägezahnreihen 3 und 4 dar; die kurze verbindende Gerade visualisiert die weitere Sägezahnreihe 3a, 4a. Die Winkel α1 zwischen der ersten Sägezahnreihe 3 und der Längsachse 7 einerseits und α2 zwischen der zweiten Sägezahnreihe 4 und der Längsachse 7 andererseits, sind in dem Vieleck aus Gründen der übersichtlicheren Darstellung überzeichnet dargestellt. Deutlich wird jedoch, dass zum Einen die erste und zweite Sägezahnreihe 3 bzw. 4 einen Winkel mit der Längsachse 7 einschließen; die Winkel α1 und α2 mit entgegengesetzten Vorzeichen gleich groß sind; dass ferner die weitere Sägezahnreihe 3a, 4a parallel zur Längsachse 7 ausgerichtet ist; dass der Rückversatz 20 sprunghaft erfolgt.

Wie der Unteransicht des Hubsägeblatts 1 gemäß Fig. 2 und der Schnittdarstellung des Hubsägeblatts 1 gemäß Fig. 3 zu entnehmen ist, sind die ersten, zweiten und weiteren Sägezähne 5, 6, 5a, 6a in den Sägezahnreihen 3, 4, 3a, 4a mit einer sogenannten, dem Fachmann bekannten Schränkung ausgebildet, was aber keineswegs zwangsläufig ist. Die Flanken des Sägeblattes 1 sind ferner geschliffen ausgeführt. Die erste, zweite und weitere Sägezahnreihe 3, 4, 3a, 4a können auch ohne Schränkung ausgebildet sein, dann liegen die Flanken jeweils in einer Ebene mit den Seitenflächen 11 des Hubsägeblatts 1; diese wird dann durch keinen der Sägezähne des Hubsägeblatts 1 überragt bzw. durchbrochen.

Aus Fig. 4 geht ferner der Freiwinkel β1 bzw. β2 der ersten, zweiten und weiteren Sägezähne 5, 5a bzw. 6, 6a sowie der Spanwinkel 13 hervor. Analog zur oben erläuterten Ausrichtung der Sägezähne wechselt auch dieser sein Vorzeichen bzw. seine Ausrichtung bezogen auf die Längsachse 7 an der Teilungsebene 10. Er beträgt +35° bzw. -35°. Prinzipiell kann der Freiwinkel β1 der ersten und/oder weiteren Sägezähne 5, 5a auf der Seite des Schafts 2 der Teilungsebene 10 und der der Freiwinkel β2 der zweiten und/oder weiteren Sägezähne 6, 6a auf der Seite der Spitze 8 der Teilungsebene 10 auch unterschiedlich groß sein. Es könnte beispielsweise vorgesehen sein, dass der Freiwinkel β1, β2 der ersten und zweiten Sägezähne 5, 6 um etwa 10-70%, insbesondere 50 % größer ist als der Freiwinkel β1, β2 der weiteren Sägezähne 5a, 6a, somit würde ein Größensprung des Freiwinkels β1, β2 im oben genannten Übergangsbereich erfolgen. Der Spanwinkel beträgt hier beispielhaft rund 10°.

Fig. 5 zeigt eine vergrößerte Darstellung des Rückversatzes 20 des Sägeblatts aus Figur 1.

Fig. 6. zeigt ein alternatives erfindungsgemäßes Hubsägeblatt 1 mit einer Japanverzahnung, während hingegen die Figuren 1 bis 5 eine Standardverzahnung aufweisen. Zudem weicht die Geometrie des Rückens ab. Überdies ist die Breite des Sägeblatts im Bereich der Teilungsebene geringer, so dass es besonders für Kurvenschnitte geeignet ist. Es versteht sich, dass unterschiedliche Geometrien des Sägeblatts, insbesondere des Schafts, Rückens, der Spitze und/oder Verzahnungsarten beliebig kombiniert werden können. Gleiche oder ähnliche Elemente sind mit den gleichen Bezugszeichen wie in Fig. 1-5 gekennzeichnet.

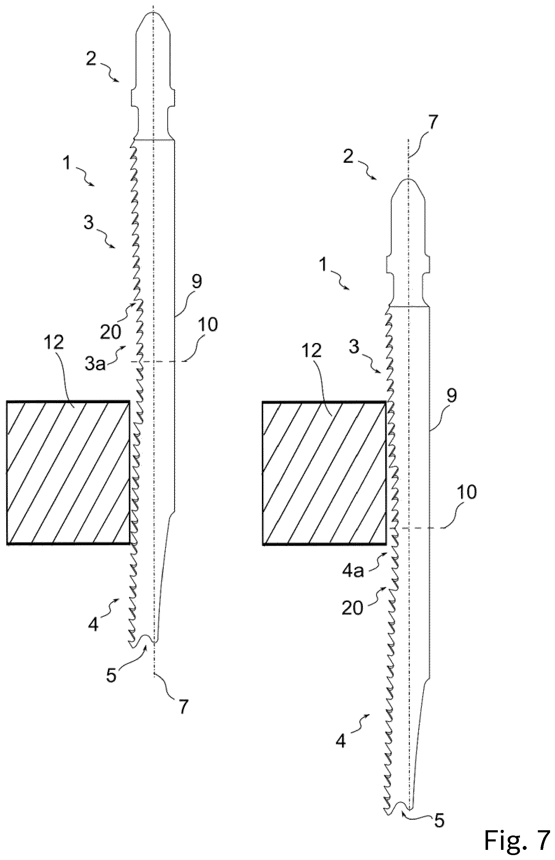

Fig. 7 zeigt das Hubsägeblatt 1 gemäß Fig. 1 bis 5 bei der Bearbeitung eines schematisch dargestellten Werkstücks 12 im Bereich eines oberen Umkehr- bzw. Totpunkts (links) und im Bereich eines unteren Umkehr- bzw. Totpunkts (rechts).

## Patentansprüche

1. Hubsägeblatt (1) für eine Werkzeugmaschine, insbesondere Stichsägeblatt, mit einer ersten Sägezahnreihe (3) und einer zweiten Sägezahnreihe (4), wobei die erste und zweite Sägezahnreihe (3, 4) bezogen auf eine Längsachse (7) des Hubsägeblatts (1) einen Winkel (α₁, α₂) einnehmen, wobei der Winkel (α₁) der ersten Sägezahnreihe (3) entgegengesetzt zum Winkel (α₂) der zweiten Sägezahnreihe (4) gerichtet ist, wobei zwischen der ersten und zweiten Sägezahnreihe (3, 4) eine weitere Sägezahnreihe (3a, 4a) angeordnet ist, die gegenüber der ersten und zweiten Sägezahnreihe (3, 4) zur Längsachse (7) sprunghaft zurückversetzt angeordnet ist, so dass ein erster Zahn (28) der weiteren Sägezahnreihe (3a), der an die erste Sägezahnreihe (3) angrenzt, von einer Längserstreckung eines ersten Profils (21) von Sägezahnspitzen (27) der ersten Sägezahnreihe (3) in Richtung der Längsachse (7) zurückversetzt ist, und ein zweiter Zahn (29) der weiteren Sägezahnreihe (4a), der an die zweite Sägezahnreihe (4) angrenzt, von einer Längserstreckung eines zweiten Profils (23) von Sägezahnspitzen (30) der zweiten Sägezahnreihe (4) in Richtung der Längsachse (7) zurückversetzt ist, **dadurch gekennzeichnet, dass** die weitere Sägezahnreihe (3a, 4a) durch eine Teilungsebene (10), welche quer zu der Längsachse (7) des Hubsägeblatts (1) verläuft, mittig geteilt wird, wobei weitere Sägezähne (5a) der weiteren Sägezahnreihe (3a, 4a), welche auf einer einem Schaft (2) zugewandten Seite der Teilungsebene (10) angeordnet sind, in Richtung einer Spitze (8) des Hubsägeblatts (1) gerichtet sind, und bezogen auf die Teilungsebene (10) auf der Seite der Spitze (8) angeordnete weitere Sägezähne (6a) in Richtung des Schafts (2) gerichtet sind.

2. Hubsägeblatt (1) nach Anspruch 1, **dadurch gekennzeichnet, dass** die weitere Sägezahnreihe (3a, 4a) auf einer Geraden angeordnet ist, insbesondere einer Geraden parallel zur Längsachse (7), oder in einer konkaven oder konvexen Reihe.

3. Hubsägeblatt (1) nach Anspruch 1 oder 2, **dadurch gekennzeichnet, dass** die erste und zweite Sägezahnreihe (3, 4) jeweils auf einer Geraden angeordnet sind, oder in einer konkaven oder konvexen Reihe.

4. Hubsägeblatt (1) nach einem der vorhergehenden Ansprüche, **dadurch gekennzeichnet, dass** der Rückversatz (20) bezogen auf eine Teilung (P) zumindest erster und/oder zweiter und/oder weiterer Sägezähne (5, 6, 5a, 6a) der korrespondierenden Sägezahnreihen (3, 4, 3a, 4a) zwischen 10 % und 35 % beträgt, insbesondere zwischen 15 % und 30 % beträgt, besonders bevorzugt 25 % beträgt.

5. Hubsägeblatt (1) nach einem der vorhergehenden Ansprüche, **dadurch gekennzeichnet, dass** die erste und zweite Sägezahnreihe (3, 4) entgegengesetzte Schneidrichtungen aufweisen.

6. Hubsägeblatt (1) nach einem der vorhergehenden Ansprüche, **dadurch gekennzeichnet, dass** die Sägezähne (5a, 6a) spiegelsymmetrisch zu einer normal zur Längsachse (7) verlaufenden und die weitere Sägezahnreihe (3a, 4a) längsmittig schneidenden Symmetrieebene (10) angeordnet sind.

7. Hubsägeblatt (1) nach einem der vorhergehenden Ansprüche, **dadurch gekennzeichnet, dass** die Sägezähne (5, 6) der ersten und zweiten Sägezahnreihe (3, 4), insbesondere auch die Sägezähne (5a, 6a) der weiteren Sägezahnreihe (3a, 4a) zumindest im Wesentlichen spiegelsymmetrisch zu der Teilungsebene (10) angeordnet sind, welche normal zur Längsachse (7) des Hubsägeblatts (1) verläuft und die weitere Sägezahnreihe (3a, 4a) längsmittig schneidet.

8. Hubsägeblatt (1) nach einem der vorhergehenden Ansprüche, **dadurch gekennzeichnet, dass** die Längserstreckung der zweiten Sägezahnreihe (4) größer oder gleich der Längserstreckung der ersten Sägezahnreihe (3) ist, insbesondere um bis zu 50 % größer, vorzugsweise 30 bis 35% größer.

9. Hubsägeblatt (1) nach einem der vorhergehenden Ansprüche, **dadurch gekennzeichnet, dass** die Längserstreckung der ersten oder zweiten Sägezahnreihe (3, 4) um 15 % bis 450 % größer ist als die Längserstreckung der weiteren Sägezahnreihe (3a, 4a), insbesondere um 30 % bis 85 % größer.

10. Hubsäge mit einem Hubsägeblatt (1) nach einem der vorhergehenden Ansprüche.

## Claims

1. Reciprocating-saw blade (1) for a power tool, in particular a jigsaw blade, having a first saw-tooth row (3) and a second saw-tooth row (4), wherein the first and second saw-tooth rows (3, 4) are at an angle (α₁, α₂) in relation to a longitudinal axis (7) of the reciprocating-saw blade (1), wherein the angle (α₁) of the first saw-tooth row (3) is directed oppositely in relation to the angle (α₂) of the second saw-tooth row (4), wherein, between the first and second saw-tooth rows (3, 4), there is arranged a further saw-tooth row (3a, 4a) which, with respect to the first and second saw-tooth rows (3, 4), is arranged in an abruptly set-back manner in relation to the longitudinal axis (7) such that a first tooth (28) of the further saw-tooth row (3a), which first tooth adjoins the first saw-tooth row (3), is set back towards the longitudinal axis (7) from a longitudinal extent of a first profile (21) of saw-tooth tips (27) of the first saw-tooth row (3) and a second tooth (29) of the further saw-tooth row (4a), which second tooth adjoins the second saw-tooth row (4), is set back towards the longitudinal axis (7) from a longitudinal extent of a second profile (23) of saw-tooth tips (30) of the second saw-tooth row (4), **characterized in that** the further saw-tooth row (3a, 4a) is divided centrally by a dividing plane (10) which extends transversely to the longitudinal axis (7) of the reciprocating-saw blade (1), wherein further saw teeth (5a) of the further saw-tooth row (3a, 4a) that are arranged on a side of the dividing plane (10) facing towards the shank (2) are directed in the direction of a tip (8) of the reciprocating-saw blade (1), and further saw teeth (6a) arranged on the side of the tip (8) in relation to the dividing plane (10) are directed in the direction of the shank (2).

2. Reciprocating-saw blade (1) according to Claim 1, **characterized in that** the further saw-tooth row (3a, 4a) is arranged on a straight line, in particular on a straight line parallel to the longitudinal axis (7), or in a concave or convex row.

3. Reciprocating-saw blade (1) according to Claim 1 or 2, **characterized in that** the first and second saw-tooth rows (3, 4) are in each case arranged on a straight line, or in a concave or convex row.

4. Reciprocating-saw blade (1) according to one of the preceding claims, **characterized in that**, in relation to a pitch (P) of at least first and/or second and/or further saw teeth (5, 6, 5a, 6a) of the corresponding saw-tooth rows (3, 4, 3a, 4a), the set-back offset (20) is between 10% and 35%, in particular is between 15% and 30%, particularly preferably is 25%.

5. Reciprocating-saw blade (1) according to one of the preceding claims, **characterized in that** the first and second saw-tooth rows (3, 4) have opposite cutting directions.

6. Reciprocating-saw blade (1) according to one of the preceding claims, **characterized in that** the saw teeth (5a, 6a) are arranged in a mirror-symmetrical manner in relation to a plane of symmetry (10) that is normal to the longitudinal axis (7) and that intersects the further saw-tooth row (3a, 4a) longitudinally centrally.

7. Reciprocating-saw blade (1) according to one of the preceding claims, **characterized in that** the saw teeth (5, 6) of the first and second saw-tooth rows (3, 4), in particular also the saw teeth (5a, 6a) of the further saw-tooth row (3a, 4a), are arranged in an at least substantially mirror-symmetrical manner in relation to the dividing plane (10), which is normal to the longitudinal axis (7) of the reciprocating-saw blade (1) and intersects the further saw-tooth row (3a, 4a) longitudinally centrally.

8. Reciprocating-saw blade (1) according to one of the preceding claims, **characterized in that** the longitudinal extent of the second saw-tooth row (4) is greater than or equal to, in particular is greater by up to 50% than, preferably is 30 to 35% greater than, the longitudinal extent of the first saw-tooth row (3).

9. Reciprocating-saw blade (1) according to one of the preceding claims, **characterized in that** the longitudinal extent of the first or second saw-tooth row (3, 4) is greater by 15% to 450% than, in particular is greater by 30% to 85% than, the longitudinal extent of the further saw-tooth row (3a, 4a).

10. Reciprocating saw having an reciprocating-saw blade (1) according to one of the preceding claims.

## Revendications

1. Lame de scie alternative (1) pour une machine-outil, notamment lame de scie sauteuse, avec une première rangée de dents de scie (3) et une deuxième rangée de dents de scie (4), la première et la deuxième rangée de dents de scie (3, 4) formant un angle (α₁, α₂) par rapport à un axe longitudinal (7) de la lame de scie alternative (1), l'angle (α₁) de la première rangée de dents de scie (3) étant orienté à l'opposé de l'angle (α₂) de la deuxième rangée de dents de scie (4), entre la première et la deuxième rangée de dents de scie (3, 4) étant agencée une autre rangée de dents de scie (3a, 4a) qui, par rapport à la première et à la deuxième rangée de dents de scie (3, 4), est agencée de manière brusquement décalée en arrière par rapport à l'axe longitudinal (7), de telle sorte qu'une première dent (28) de l'autre rangée de dents de scie (3a), qui est adjacente à la première rangée de dents de scie (3), est décalée en arrière d'une extension longitudinale d'un premier profil (21) de pointes de dents de scie (27) de la première rangée de dents de scie (3) dans la direction de l'axe longitudinal (7), et une deuxième dent (29) de l'autre rangée de dents de scie (4a), qui est adjacente à la deuxième rangée de dents de scie (4), est décalée en arrière d'une extension longitudinale d'un deuxième profil (23) de pointes de dents de scie (30) de la deuxième rangée de dents de scie (4) dans la direction de l'axe longitudinal (7), **caractérisée en ce que** l'autre rangée de dents de scie (3a, 4a) est divisée au centre par un plan de division (10) qui s'étend transversalement à l'axe longitudinal (7) de la lame de scie alternative (1), d'autres dents de scie (5a) de l'autre rangée de dents de scie (3a, 4a), qui sont agencées sur un côté du plan de division (10) tourné vers une tige (2), étant orientées en direction d'une pointe (8) de la lame de scie alternative (1), et d'autres dents de scie (6a) agencées sur le côté de la pointe (8) par rapport au plan de division (10) étant orientées en direction de la tige (2).

2. Lame de scie alternative (1) selon la revendication 1, **caractérisée en ce que** l'autre rangée de dents de scie (3a, 4a) est agencée sur une ligne droite, notamment une ligne droite parallèle à l'axe longitudinal (7), ou dans une rangée concave ou convexe.

3. Lame de scie alternative (1) selon la revendication 1 ou 2, **caractérisée en ce que** les première et deuxième rangées de dents de scie (3, 4) sont agencées chacune sur une ligne droite, ou dans une rangée concave ou convexe.

4. Lame de scie alternative (1) selon l'une quelconque des revendications précédentes, **caractérisée en ce que** le décalage arrière (20) par rapport à un pas (P) d'au moins une première et/ou une deuxième et/ou d'autres dents de scie (5, 6, 5a, 6a) des rangées de dents de scie correspondantes (3, 4, 3a, 4a) est compris entre 10 % et 35 %, notamment entre 15 % et 30 %, de manière particulièrement préférée est de 25 %.

5. Lame de scie alternative (1) selon l'une quelconque des revendications précédentes, **caractérisée en ce que** les première et deuxième rangées de dents de scie (3, 4) présentent des directions de coupe opposées.

6. Lame de scie alternative (1) selon l'une quelconque des revendications précédentes, **caractérisée en ce que** les dents de scie (5a, 6a) sont agencées de manière symétrique par rapport à un plan de symétrie (10) s'étendant normalement à l'axe longitudinal (7) et coupant l'autre rangée de dents de scie (3a, 4a) au milieu longitudinalement.

7. Lame de scie alternative (1) selon l'une quelconque des revendications précédentes, **caractérisée en ce que** les dents de scie (5, 6) de la première et de la deuxième rangée de dents de scie (3, 4), notamment également les dents de scie (5a, 6a) de l'autre rangée de dents de scie (3a, 4a) sont agencées au moins essentiellement symétriquement par rapport au plan de division (10), qui s'étend normalement à l'axe longitudinal (7) de la lame de scie alternative (1) et coupe l'autre rangée de dents de scie (3a, 4a) au milieu longitudinalement.

8. Lame de scie alternative (1) selon l'une quelconque des revendications précédentes, **caractérisée en ce que** l'extension longitudinale de la deuxième rangée de dents de scie (4) est supérieure ou égale à l'extension longitudinale de la première rangée de dents de scie (3), notamment supérieure jusqu'à 50 %, de préférence supérieure de 30 à 35 %.

9. Lame de scie alternative (1) selon l'une quelconque des revendications précédentes, **caractérisée en ce que** l'extension longitudinale de la première ou de la deuxième rangée de dents de scie (3, 4) est supérieure de 15 % à 450 % à l'extension longitudinale de l'autre rangée de dents de scie (3a, 4a), notamment supérieure de 30 % à 85 %.

10. Scie alternative avec une lame de scie alternative (1) selon l'une quelconque des revendications précédentes.
